# DEMANDE DE BREVET EUROPEEN

(11) **EP 3 793 020 A1**
(43) Date de publication de la demande: **17.03.2021**
(21) Numéro de dépôt: 20195580.4
(22) Date de dépôt: 10.09.2020
(51) Int. Cl.: H01M 50/20, H01M 50/30, H01M 50/50

(54) **ENSEMBLE D'UNE BATTERIE ÉLECTRIQUE ET D'UNE ENVELOPPE**

(30) Priorité: 16.09.2019 FR 1910183
(71) Demandeur: Eco Concept Marine, 72400 La Ferte-Bernard (FR)
(72) Inventeur: ETTIENNE, Benjamin, 72190 SAINT PAVACE (FR); VIGOUROUX, Philippe, 71100 Chalon Sur Saône (FR)
(74) Mandataire: Ipsilon

(57) **Abrégé**

L'invention se rapporte à un ensemble (1) comprenant une batterie électrique et une enveloppe placée autour de ladite batterie.

Selon l'invention, l'enveloppe comprend un réceptacle (3) et un couvercle (4) apte à coiffer ledit réceptacle (3) afin de délimiter un espace interne dans lequel est placée la batterie, le réceptacle (3) possédant des moyens d'emboitement (60) aptes à coopérer avec des moyens d'emboitement complémentaires (33, 34) dudit couvercle (4), afin de former une chaine continue et stabilisée d'au moins deux ensembles (1).

## Description

La présente invention concerne un ensemble comprenant une batterie électrique et une enveloppe. Généralement, une batterie électrique comprend plusieurs cellules montées en série et/ou en parallèle. Lorsque cette batterie est utilisée dans un endroit fixe comme une maison ou dans un endroit mobile comme un véhicule à propulsion électrique, elle peut se retrouver exposée à un environnement extérieur tel que par exemple de la pluie, susceptible de la dégrader ou de biaiser son fonctionnement. Elle peut également subir un choc intempestif ou être soumise à de fortes variations de température. Afin de remédier à ces risques potentiels d'endommagement ou de dégradation, la batterie est généralement logée dans une enveloppe de protection épousant au plus près la forme de ladite batterie. Dans le cadre de l'invention, cette enveloppe est supposée être indissociable de la batterie et n'est donc pas conçue pour pouvoir être séparée de ladite batterie au moyen d'une simple manipulation avec un outil usuel du commerce.

Un ensemble selon l'invention, comprend une enveloppe multifonctions permettant de facilement stocker ledit ensemble avec d'autres ensembles de façon à optimiser leur encombrement, tout en maintenant parfaitement opérationnelle la batterie logée dans ledit ensemble.

Il est supposé qu'une batterie électrique d'un ensemble selon l'invention possède classiquement une pluralité de cellules.

L'invention a pour objet un ensemble comprenant une batterie électrique et une enveloppe placée autour de ladite batterie.

Selon l'invention, l'enveloppe comprend un réceptacle et un couvercle apte à coiffer ledit réceptacle afin de délimiter un espace interne dans lequel est placé la batterie, le réceptacle possédant des moyens d'emboitement aptes à coopérer avec des moyens d'emboitement complémentaires dudit couvercle, afin de former une chaine continue et stabilisée d'au moins deux ensembles. Afin de lever toute ambiguïté, ce sont les moyens d'emboitement d'un réceptacle d'un ensemble qui sont aptes à coopérer avec les moyens d'emboitement complémentaire du couvercle d'un autre ensemble. De cette manière, des ensembles selon l'invention possédant chacun une batterie électrique et une enveloppe, peuvent être empilés dans un endroit particulier, de façon stable et peu encombrante. Les moyens d'emboitement et les moyens d'emboitement complémentaires peuvent coopérer de différentes manières, comme par exemple au moyen d'une interaction de type mâle/femelle ou par une interaction de type clippage. L'enveloppe est isolante par rapport au courant électrique, et permet donc d'isoler électriquement la batterie de l'extérieur de l'enveloppe. Avantageusement, cette enveloppe est en matière plastique. De façon préférentielle, l'enveloppe épouse au plus près la forme de la batterie en ne laissant subsister qu'un jeu minimal ou pas de jeu avec celle-ci. L'objectif est d'empêcher que l''enveloppe n'accroisse de façon significative l'encombrement de la batterie.

Selon une caractéristique possible de l'invention, les moyens d'emboitement sont constitués par des éléments de type femelle et les moyens d'emboitement complémentaires sont constitués par des éléments de type mâle. Cette interaction peut s'effectuer par un simple contact de sorte que les éléments de type mâle se glissent sans effort dans les éléments de type femelle. Elle peut également s'effectuer à force, les éléments de type mâle s'insérant au prix d'un certain effort dans les éléments de type femelle. Il peut également s'agir d'une interaction de type clippage.

Selon une caractéristique possible de l'invention, le réceptacle et le couvercle sont chacun délimités par des parois conférant audit réceptacle et audit couvercle une forme rectangulaire, les parois du réceptacle possédant chacune au moins une empreinte creuse apte à maintenir les cellules de la batterie dans l'enveloppe. Chaque empreinte creuse est un élément saillant vers l'intérieur de l'enveloppe et qui permet de venir au contact des cellules de la batterie pour les maintenir dans une position donnée au sein de ladite enveloppe. Chaque empreinte constitue également un renfort permettant de rigidifier un peu plus l'enveloppe au niveau du réceptacle.

Selon une caractéristique possible de l'invention, les deux parois parallèles matérialisant les deux grands côtés du réceptacle possèdent chacune deux empreintes creuse, les deux parois parallèles matérialisant les deux petits côtés du réceptacle possédant chacune une seule empreinte creuse. Il s'agit d'une configuration particulièrement performante pour maintenir les cellules de la batterie dans une position stable dans l'enveloppe.

Selon une caractéristique possible de l'invention, les parois parallèles matérialisant les deux petits côtés du réceptacle comportent chacune une poignée. Puisqu'un ensemble selon l'invention est amené à être transporté ou à être déplacé, il est doté de deux poignées permettant de faciliter sa prise et son soulèvement et de deux lignes de passage des doigts sur les grands côtés.

Selon une caractéristique possible de l'invention, le couvercle comprend au moins une gouttière d'évacuation d'eau. Il est en effet important que de l'eau ne stagne pas sur le couvercle, afin d'empêcher tout risque de pénétration de cette eau dans la batterie. Cette gouttière peut par exemple être constituée par un sillon creusé dans le couvercle.

Selon une caractéristique possible de l'invention, le couvercle est doté d'un évent empêchant toute montée en pression dans l'enveloppe. Cet évent peut par exemple se traduire par un orifice nu ou doté d'un clapet timbré à une certaine pression.

Selon une caractéristique possible de l'invention, le couvercle comprend un interrupteur de mise sous tension et un voyant lumineux qui est un témoin de cette mise sous tension. Cet interrupteur est accessible depuis l'extérieur de l'ensemble, et ne nécessite qu'une simple poussée digitale pour être activé. Dès que la batterie est mise sous tension le voyant lumineux s'allume. Ce voyant lumineux peut comprendre au moins une LED, et peut par exemple être coloré.

Selon une caractéristique possible de l'invention, le couvercle comprend au moins une prise à choisir parmi une prise de charge, une prise de décharge et une prise pour la gestion de la supervision dudit ensemble. Dans un ensemble selon l'invention, la prise de charge et la prise de décharge peuvent être distinctes ou confondues.

Selon une caractéristique possible de l'invention, le couvercle est fixé au réceptacle au moyen de plusieurs vis, le couvercle comprenant des empreintes creuses secondaires réparties sur la périphérie dudit couvercle et destinées chacune à recevoir l'une desdites vis. Les vis sont inviolables de sorte qu'un individu ayant acquis un ensemble conforme à l'invention ne peut pas désolidariser le couvercle du réceptacle et accéder à la batterie. Ces empreintes creuses secondaires servent également à rigidifier le couvercle.

Selon une caractéristique possible de l'invention, le couvercle est monté sur le réceptacle par l'intermédiaire d'un joint d'étanchéité périphérique. Il s'agit d'un joint d'interface situé entre le couvercle et le réceptacle et qui subit un effort d'écrasement. En étant périphérique, le joint est situé autour de la batterie et n'interfère donc pas avec celle-ci.

Selon une caractéristique possible de l'invention, le réceptacle et le couvercle sont fabriqués en polypropylène par roto-moulage.

L'invention a pour autre objet une enveloppe pour la réalisation d'un ensemble conforme à l'invention.

Selon l'invention, l'enveloppe comprend un réceptacle et un couvercle apte à coiffer ledit réceptacle afin de délimiter un espace interne dans lequel est destinée à être placée la batterie, le réceptacle possédant des moyens d'emboitement aptes à coopérer avec des moyens d'emboitement complémentaires dudit couvercle, afin de former une chaine continue et stabilisée d'au moins deux ensembles.

Un ensemble selon l'invention possède l'avantage d'être peu encombrant tout en possédant une pluralité de fonction lui conférant un caractère d'universalité. En effet, un tel ensemble peut être indifféremment monté dans une installation fixe telle que par exemple un site industriel ou une maison, ou sur un véhicule routier ou maritime. Il a de plus l'avantage d'être robuste et de pouvoir être empilé sur au moins un autre ensemble de façon stable et peu encombrante.

On donne, ci-après, une description détaillée d'un mode de réalisation préféré d'un ensemble selon l'invention, en se référant aux figures suivantes :
[Fig. 1] représente une vue en perspective du dessous du réceptacle d'un ensemble selon l'invention,
[Fig. 2] représente une vue en perspective du dessus du réceptacle de la figure 1,
[Fig. 3] représente une vue en perspective du dessus d'un ensemble selon l'invention,
[Fig. 4] représente une vue en perspective du dessus de deux ensembles selon l'invention empilés l'un sur l'autre,
[Fig. 5] représente une vue en perspective du dessus de cinq ensembles selon l'invention empilés les uns sur les autres.

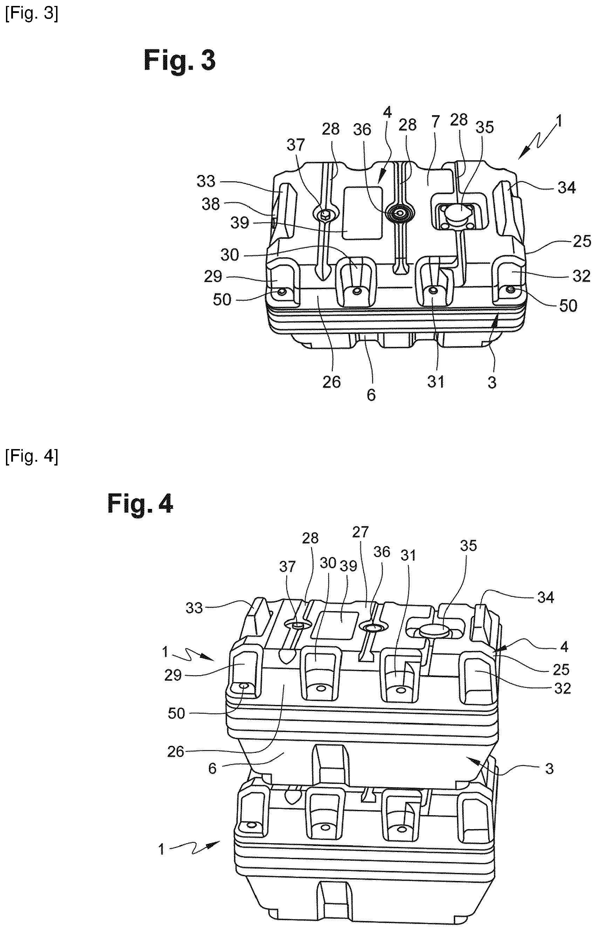

En se référant aux figures 3, 4 et 5, un ensemble 1 selon l'invention comprend une batterie électrique composée d'une pluralité de cellules électriques, et une enveloppe entourant ladite batterie électrique. Cette enveloppe comporte un réceptacle 3 et un couvercle 4, ledit couvercle 4 étant destiné à venir couvrir ledit réceptacle 3 pour délimiter un espace interne prévu pour loger la batterie électrique.

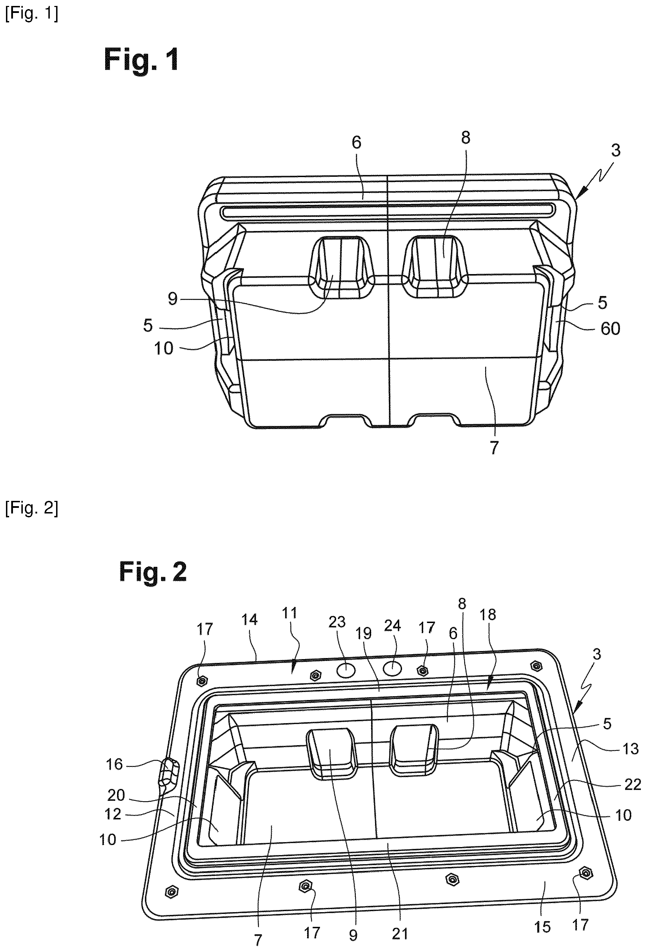

En se référant aux figures 1 et 2, le réceptacle 3 est schématiquement délimité par quatre parois 5, 6 définissant un contour rectangulaire et par un fond 7. Deux 6 desdites parois sont allongées et parallèles, et matérialisent les grands côtés du rectangle, les deux autres parois 5 étant raccourcies et parallèles, et matérialisent les petits côtés dudit rectangle. Chacune des deux parois 6 allongées possède deux empreintes creuses 8, 9 alignées suivant un axe longitudinal de ladite paroi 6. Chaque empreinte creuse 8, 9 est assimilable à une bosse saillant vers l'intérieur du réceptacle 3. Chacune des deux parois 5 raccourcies comporte également une empreinte creuse 10 assimilable à une bosse saillant vers l'intérieur du réceptacle 3. Les empreintes creuses 8, 9, 10 des parois 5, 6 délimitant le réceptacle 3 servent à rigidifier ledit réceptacle 3 et à maintenir dans une position donnée, les cellules électriques de la batterie dans l'enveloppe 2.

En se référant à la figure 2, le réceptacle 3 présente un cadre 11 d'interface plan, constitué par quatre bords 12, 13, 14, 15 repliés des quatre parois 5, 6 délimitant ledit réceptacle 3. Ces bords 12, 13, 14, 15 prolongent ainsi les quatre parois 5, 6 en étant repliés à 90° par rapport auxdites parois 5, 6, si bien qu'ils définissent un cadre 11 plan qui est perpendiculaire à ces parois 5, 6. Ce cadre 11 comporte un détrompeur 16 sous la forme d'une bosse saillant de l'un 12 des deux bords courts dudit cadre 11, ledit détrompeur 16 permettant de monter le couvercle 2 sur le réceptacle 3 que d'une seule manière. Chacun des deux bords allongés 14, 15 du cadre 11 possède une série de quatre inserts 17 borgnes en laiton régulièrement espacés le long dudit bord allongé 14, 15. Le cadre 11 délimite une gorge rectangulaire 18 possédant un fond sous la forme de quatre segments plans 19, 20, 21, 22 parallèles aux bords 12, 13, 14, 15 du cadre 11 en étant légèrement décalés par rapport à ceux-ci. Autrement dit, la gorge possède un fond sous la forme d'un cadre secondaire plan qui est parallèle au cadre 11 d'interface, en étant légèrement décalé par rapport à celui-ci. Le réceptacle 3 possède également sur l'un des deux bords allongés 14, 15 du cadre d'interface 11, deux dateurs 23, 24 qui indiquent l'homologation CE, la nature de la composition de l'enveloppe entourant la batterie, le mois et l'année de fabrication ainsi que toute information apte à caractériser et/ou à identifier un ensemble 1 selon l'invention. Le réceptacle 3 présente également au niveau de chacune des deux parois 5 raccourcies une encoche femelle 60 et une poignée apte à faciliter la préhension d'un ensemble 1 selon l'invention. Le réceptacle 3 est préférentiellement fabriqué en polypropylène PP46 par roto-moulage. Il possède une seule peau de 4mm d'épaisseur.

En se référant aux figures 3 et 4, le couvercle 4 est schématiquement délimité par quatre parois 25, 26 définissant un contour rectangulaire et par un plafond 27. Deux 26 desdites parois sont allongées et parallèles, et matérialisent les grands côtés du rectangle, les deux autres parois 25 étant raccourcies et parallèles, et matérialisent les petits côtés dudit rectangle. Le plafond 27 présente trois gouttières 28 parallèles aux parois raccourcies 25 et traversant de part en part ledit plafond 27. Ces gouttières 28 sont avantageusement réalisées sous la forme de trois sillons creusés dans le plafond 27 et régulièrement espacés le long d'un axe longitudinal du couvercle 4. Une fois que le couvercle 4 est fixé au réceptacle 3, les gouttières 28 sont extérieures à l'enveloppe 2 et sont destinées à évacuer de l'eau pouvant par exemple provenir de la pluie. Chaque paroi 26 allongée du couvercle 4 comprend quatre empreintes secondaires 29, 30, 31, 32 creuses, régulièrement espacées le long d'un axe longitudinal de ladite paroi 26 allongée. Chaque empreinte secondaire creuse 29, 30, 31, 32 est assimilable à une bosse saillant vers l'intérieur du couvercle 4. Chaque empreinte secondaire creuse 29, 30, 31, 32 possède un fond traversé par une vis 50 de type M6. Le plafond 27 du couvercle 4 présente deux protubérances 33, 34 placées au niveau des deux parois raccourcies 25 et s'étendant le long desdites parois raccourcies 25. Ces protubérances 33, 34 sont implantées sur une surface externe du couvercle 4 et saillent donc vers l'extérieur dudit couvercle 4. Du plafond 27 du couvercle 4 émergent une prise de charge 35, un interrupteur 36 de mise sous tension associé à un voyant lumineux qui va s'allumer dès que l'interrupteur 36 sera placé dans une position correspondant à cette mise sous tension, et un évent 37 permettant d'empêcher toute mise en pression à l'intérieur de l'enveloppe 2. Cet évent apparait par exemple sous la forme d'un orifice de petite dimension, pouvant par exemple être associé à un clapet timbré à une pression donnée. Le couvercle 4 comprend également une prise de décharge 38 placée sur l'une des deux parois raccourcies 25 et une plaque d'identification 39 placée sur une surface externe dudit couvercle 4. Ce couvercle 4 est préférentiellement fabriqué en polypropylène PP46 par roto-moulage et possède avantageusement deux peaux.

A l'image du réceptacle 3, le couvercle 4 possède un cadre d'interface plan de forme rectangulaire et délimitant une gorge rectangulaire possédant un fond sous la forme de quatre segments plans parallèles aux bords dudit cadre d'interface en étant légèrement décalés par rapport à ceux-ci. Autrement dit, la gorge possède un fond sous la forme d'un cadre secondaire plan, qui est parallèle au cadre d'interface en étant légèrement décalé par rapport à celui-ci.

La batterie est placée dans le réceptacle 3, puis le couvercle 4 vient coiffer ledit réceptacle 3 en emprisonnant ladite batterie. Un joint d'étanchéité de type jonc et ayant une épaisseur de 6 mm est placé dans la gorge 18 du réceptacle 3. Le couvercle 4 est refermé sur le réceptacle de sorte que ledit joint vienne se loger dans la gorge du couvercle 4 et de sorte que les vis 50 vis du couvercle 4 soient chacune vissée dans un insert 17 borgne du réceptacle 3. De cette manière, l'enveloppe résultante, entourant la batterie est étanche et inviolable, puisqu'un individu ne peut pas accéder aux vis 50 afin de séparer le couvercle 4 et le réceptacle 3.

Une fois qu'un ensemble 1 selon l'invention a été fabriqué, il peut facilement être manipulé et/ou déplacé par un individu qui peut se saisir des poignées du réceptacle 3.

En se référant à la figure 4, deux ensembles 1 selon l'invention peuvent être empilés l'un sur l'autre de manière stable, au moyen d'une insertion des deux protubérances 33, 44 du couvercle 4 de l'ensemble 1 inférieur, dans les deux encoches 60 femelles du réceptacle 4 de l'ensemble 1 supérieur. Cette insertion des protubérances 33, 44 dans les encoches 60 garantit une stabilité de montage de l'empilement des deux ensembles 1, dans un plan d'interface horizontal entre lesdits deux ensembles 1.

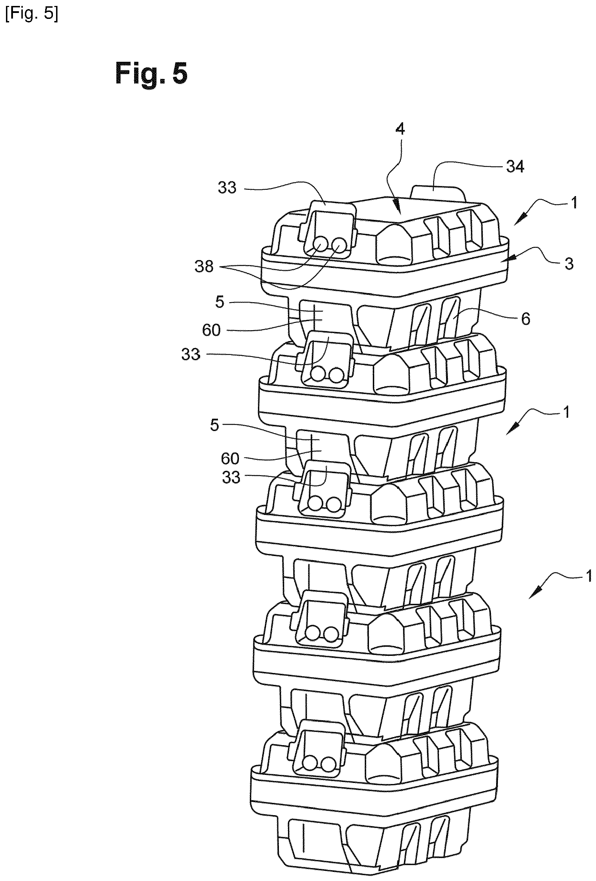

En se référant à la figure 5, l'empilement évoqué ci-avant n'est pas seulement limité à deux ensembles 1, mais peut s'étendre à une pluralité d'ensembles 1 dont le nombre est supérieur à deux, comme par exemple égal à cinq, tel qu'illustré à la figure 5.

## Revendications

1. Ensemble (1) comprenant une batterie électrique et une enveloppe placée autour de ladite batterie, **caractérisé en ce que** l'enveloppe comprend un réceptacle (3) et un couvercle (4) apte à coiffer ledit réceptacle (3) afin de délimiter un espace interne dans lequel est placée la batterie, et **en ce que** le réceptacle (3) possède des moyens d'emboitement (60) aptes à coopérer avec des moyens d'emboitement complémentaires (33, 34) dudit couvercle (4), afin de former une chaine continue et stabilisée d'au moins deux ensembles (1).

2. Ensemble selon la revendication 1, **caractérisé en ce que** les moyens d'emboitement (60) sont constitués par des éléments de type femelle et les moyens d'emboitement complémentaires (33,34) sont constitués par des éléments de type mâle.

3. Ensemble selon l'une quelconque des revendications 1 ou 2, **caractérisé en ce que** le réceptacle (3) et le couvercle (4) sont chacun délimités par des parois (5, 6, 25, 26) conférant audit réceptacle (3) et audit couvercle (4) une forme rectangulaire, et **en ce que** les parois (5, 6) du réceptacle possèdent chacune au moins une empreinte (8, 9, 10) creuse apte à maintenir les cellules de la batterie dans l'enveloppe.

4. Ensemble selon la revendication 3, **caractérisé en ce que** les parois parallèles (5) matérialisant les deux petits côtés du réceptacle (3) comportent chacune une poignée.

5. Ensemble selon l'une quelconque des revendications 1 à 4, **caractérisé en ce que** le couvercle (4) comprend au moins une gouttière (28) d'évacuation d'eau.

6. Ensemble selon l'une quelconque des revendications 1 à 5, **caractérisé en ce que** le couvercle (4) est doté d'un évent (37) empêchant toute montée en pression dans l'enveloppe.

7. Ensemble selon l'une quelconque des revendications 1 à 6, **caractérisé en ce que** le couvercle (4) comprend un interrupteur (36) de mise sous tension et un voyant lumineux qui est un témoin de cette mise sous tension.

8. Ensemble selon l'une quelconque des revendications 1 à 7, **caractérisé en ce que** le couvercle (4) comprend au moins une prise à choisir parmi une prise de charge (35), une prise de décharge (38) et une prise pour la gestion de la supervision dudit ensemble (1).

9. Ensemble selon l'une quelconque des revendications 1 à 8, **caractérisé en ce que** le couvercle (4) est fixé au réceptacle (3) au moyen de plusieurs vis (50), et **en ce que** le couvercle (4) comprend des empreintes creuses (29, 30, 31, 32) secondaires réparties sur la périphérie dudit couvercle (4) et destinées chacune à recevoir l'une desdites vis (50) vis.

10. Ensemble selon l'une quelconque des revendications 1 à 9, **caractérisé en ce que** le couvercle (4) est monté sur le réceptacle (3) par l'intermédiaire d'un joint d'étanchéité périphérique.

11. Ensemble selon l'une quelconque des revendications 1 à 10, **caractérisé en ce que** le réceptacle (3) et le couvercle (4) sont fabriqués en polypropylène par roto-moulage.

12. Enveloppe pour la réalisation d'un ensemble (1) conforme à l'une quelconque des revendications 1 à 11, **caractérisée en ce que** l'enveloppe comprend un réceptacle (3) et un couvercle (4) apte à coiffer ledit réceptacle (3) afin de délimiter un espace interne dans lequel est destinée à être placée la batterie, et **en ce que** le réceptacle (3) possède des moyens d'emboitement (60) aptes à coopérer avec des moyens d'emboitement complémentaires (33, 34) dudit couvercle (4), afin de former une chaine continue et stabilisée d'au moins deux ensembles (1).
